# EUROPEAN PATENT SPECIFICATION

(11) **EP 2 031 589 B1**
(45) Date of publication and mention of the grant of the patent: **19.10.2011**
(21) Application number: 07115328.2
(22) Date of filing: 30.08.2007
(51) Int. Cl.: G11B 7/243

(54) **The recordable optical recording media**
Beschreibbares optisches Aufzeichnungsmedium
Support d'enregistrement optique enregistrable

(43) Date of publication of application: 04.03.2009
(73) Proprietor: CMC Magnetics Corporation, Taipei (TW)
(72) Inventor: Chang, Han-Feng c/o CMC Magnetics Corp., Taipei (TW); Liu, Pang-Chi c/o CMC Magnetics Corp., Taipei (TW); Yeh, Chin-Yen c/o CMC Magnetics Corp., Taipei (TW); Ma, Shih-Hsien c/o CMC Magnetics Corp., Taipei (TW); Lin, Minte c/o CMC Magnetics Corp., Taipei (TW); Fang, Kuan-Lan c/o CMC Magnetics Corp., Taipei (TW); Tang, Wei-Tai c/o CMC Magnetics Corp., Taipei (TW); Chiang, Don-Yau c/o CMC Magnetics Corp., Taipei (TW)
(74) Representative: Wilhelms · Kilian & Partner Patentanwälte

(56) References cited:
- EP-A- 1 351 230
- EP-A- 1 426 941
- EP-A- 1 750 259
- YUNG-CHIUN HER ET AL: "Crystallization Characteristics and Recording Mechanism of a-Si/Ni Bilayer and Its Potential for use in Write-Once Blue Ray Disk" OPTICAL DATA STORAGE TOPICAL MEETING, 2006 MONTREAL, QUEBEC, CANADA 23-26 APRIL 2006, PISCATAWAY, NJ, USA,IEEE, 23 April 2006 (2006-04-23), pages 76-78, XP010917096 ISBN: 0-7803-9494-1

## Description

### BACKGROUND OF THE INVENTION

### 1.Field of the Invention

The invention relates to an optical recording medium and in particular to a write-once optical recording medium having excellent high-speed recording characteristics and stability of data storage.

### 2. Description of the Prior Art

With the development of the Internet and increased capacity of computers, optical information recording media are desired to have a large recording capacity, recording a large amount data at high speed and can store information over a long time. Among various types of the optical recording media, the most widely used is write-once recording medium, such as compact disc recordable (CD-R) and digital versatile disc recordable (DVD-R).

Currently, the material used as the recording layer of write-once optical discs is organic dye including anthraaquinone 'cyanine' indolizium and phthalocyanine (R.T. Young, D. Strand, J. Gonzalez-Hernadez, and S.R. Ovshinsky, Appl.Phys. Vol.60, p.4319, 1986; Y. Maeda, H. Andoh, I. Ikuta, and H. Minemura, J. Appl. Phys. Vol.64, p.1715, 1988;M. Takenaga, N. Yamada, M. K. Nishiuchi, N. Akira, T. Ohta, S. Nakamura, and T. Yamashita, J. Appl. Phys. Vol. 54, p.5376, 1983). The information data are recorded utilizing changes in an optical characteristic caused by chemical change of the organic dye under irradiation of a laser beam.

The advantages of the organic dye are non-oxidation, low phase transmission temperature, high recording sensitivity and low cost. However, the disadvantages of the organic dye are as follows :
1. It will cause large jitter values and distortion of disks due to poor conductivity.
2. It will cause poor durability due to low phase transmission temperature.
3. It will cause poor visible light absorption due to the short wavelength range absorption.
4. It will cause poor yield due to non-uniform coating for higher recording density PC substrate.
5. It will cause environment pollution due to organic solvent.

In order to improve the disadvantages of currently used organic dye with short range wavelength absorbed and non-uniform coating, it is desirable to replace organic dyes with inorganic materials as recording layer. The prior art (U.S. Pat. No. 5,252,370 and U.S. Pat. No. 5,334,433) disclose a write-once optical recording medium having a recording layer containing an inorganic compound, i.e. silver oxide or iron nitride. U.S. Pat. No. 4,477,819 and U.S. Pat. No. 5,458,941 disclose utilizing bi-layer inorganic material as recording media, and the materials therein are Ge/Al, Si/Al, GaSb/Ag.

Upon exposure to recording laser light, the microstructure of inorganic bi-layer occur changing, the recording mark were created via diffusion and mixing reaction within irradiating area. The space and recording mark cause a change of optical conditions. This enables digital data to be stored in media. Moreover, an optical recording medium is known from EP 1 351 230 which comprises, amongst others, a first recording layer which contains an element selected from a group consisting of Si, Ge, etc. as a primary component and a second recording layer which contains Cu as a primary component, wherein further elements may be added to this second recording layer selected from a group consisting of Al, Si, Zn, Mg, Au, Sn, Ge, Ag, P, Cr, Fe and Ti. In contrast thereto, the optical recording medium according to claims 1 and 9 comprises, amongst others, a first and second recording layer, wherein the second recording layer contains an element selected from the group consisting of Ni, Co, Mo, and Ta as a primary component.

### SUMMARY OF THE INVENTION

The objective of the invention is to provide a high-speed, write-once type optical recording medium that utilizes inorganic materials and has good storage reliability and high climate-resistance. This object is reached by the subject-matters of the claims 1 and 9. Further advantageous embodiments of the invention are subject-matter of the dependent claims. The optical recording medium of the present invention is suitable for optical recording using a laser with the visible light wavelength in the range of 200nm to 750nm.

An optical recording medium according to an aspect of the invention comprises a support substrate, bi-layer recording thin films, a light transmitting layer. Further, the bi-layer recording thin films were sandwiched in between two protective layers. The optical recording medium according to this aspect is formed such that the bi-layer recording films were formed by laminating first and second recording layers, upon heating via irradiation of a laser light from the side of the light transmission layer or from the side of the substrate, causes diffusion and mixing reactions. The reactions enable the formation of a recording mark based on an irreversible change in reflectance.

The first recording layer of the optical recording medium according to this aspect of the invention is made of a semiconductor material that is selected from the element of Si or Ge, and combinations thereof. The second recording layer according to this aspect contains an element selected from the group consisting of Ni, Co, Mo, and Ta as a primary component.

According to a further aspect of the invention, the optical recording medium further comprises a first protective layer and a second protective layer on opposite sides of the bi-layer recording films. The materials forming the first protective layer and the second protective layer are dielectric materials, such as zinc sulfide-silicon dioxide (ZnS-SiO₂), niobium oxide (NbₓO_{y}), tin dioxide-silicon dioxide (SnO₂-SiO₂), silicon nitride (SiNₓ), germanium nitride (GeNₓ),aluminum nitride (AlNₓ), and silicon carbide (SiC). The thickness of the first and second protective layer is in the range of 1nm to 300nm. The first and second protective layer can be one of above materials or a complex layer comprising above materials.

According to another aspect of the invention, the reflective layer is made of a metal material, for example, Al, Ag, Au, Ta, Ni, Ti, Mo, and an alloy of the foregoing metals.

Due to a metal with high melting point, such as Ni, Mo, Ta, Co, and a semiconductor as the materials of bi-layer recording films in the optical recording medium according to the above-mentioned aspect of the invention, several advantages such as high reflectivity, high climate-resistance, applicability to high speed recording, recording using whole spectrum of the visible light, and low pollution to the environment can be achieved.

### BRIEF DESCRIPTION OF THE DRAWINGS

The invention will be described in detail with reference to the accompany drawings, in which
FIG. 1A and 1B are schematic cross-sectional views showing the construction of optical recording medium of the invention.
FIG. 2. is a characteristics diagram showing the relationship between the write power and jitter values of the reproduction signal, for the optical recording medium of an experiment 1 of the invention.
FIG. 3. is a BD 2T-8T dynamic eye pattern of a testing disc according to experiment 1 of the invention.
FIG. 4. is a characteristics diagram showing the relationship between the write power and modulation of the reproduction signal according to experiment 1 of the invention.
FIG 5. is the climate test results of the testing disc under 80°C temperature and 85% relative humidity for 50, 100 and 250 hours respectively, for the optical recording medium according to experiment 1 at BD-R 1X recording speed.
FIG 6 is the climate test results of the testing disc under 80°C temperature and 85% relative humidity for 50, 100 and 250 hours respectively, for the optical recording medium according to experiment 1 at BD-R 2X recording speed.
FIG 7. is a characteristics diagram showing the relationship between the write power and modulation of the reproduction signal according to experiment 2 at BD-R 2X recording speed.

### DESCRIPTION OF THE PREFERRED EMBODIMENT

The invention will be described in detailed with reference to the accompanying drawings.

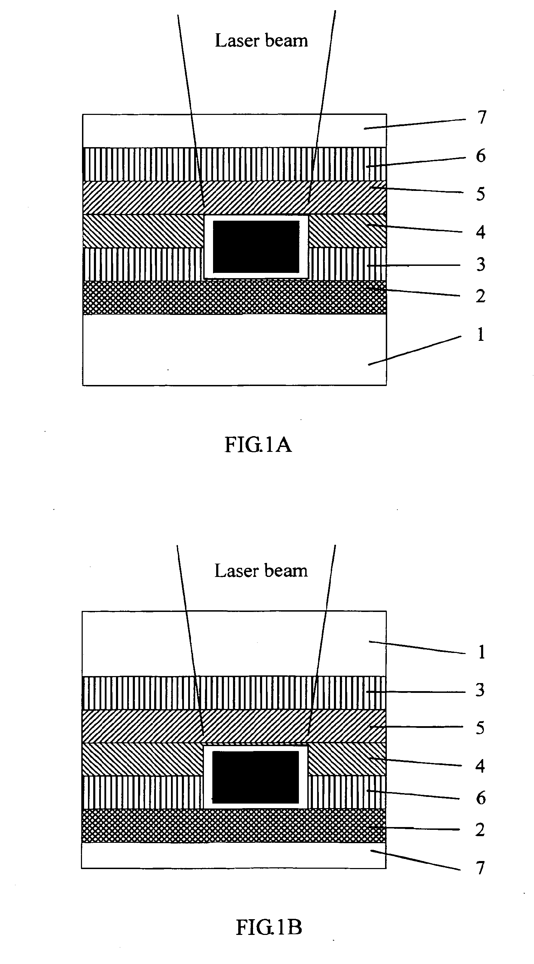

FIG. 1A is a schematic sectional view showing a structure of an optical recording media of the invention. As shown in FIG. 1A, the optical recording media of the invention comprises a substrate 1, a reflective layer 2, a first protective layer 3, a first recording layer 4, a second recording layer 5, a second protective layer 6, and a light transmitting layer 7, sequentially deposited on the substrate 1.

In this structure, the optical recording media of the present invention is configured such that the laser beam is to be irradiated thereon from the light-transmitting layer 7 side.

The substrate 1 is in the form of a disc with grooves and lands on the surface. The grooves and lands function as guide tracks for recording and reproducing data. The substrate 1 is comprised of a material including, but not limited to, a glass, a polycarbonate, silicone resin, an acrylic resin, a polymethylmethacrylate, and ceramic materials.

The reflective layer 2 is made of a metal material, for example, Al, Ag, Au, Ta, Ni, Ti, Mo, and an alloy of the foregoing metals. The thickness of the reflective layer 2 is in the range of 3nm to 200nm.

The first protective layer 3 is formed on the reflective layer 2 and is comprised of a material including zinc sulfide-silicon dioxide (ZnS-SiO₂), niobium oxide (NbₓO_{y}), tin dioxide-silicon dioxide (SnO₂-SiO₂), silicon nitride (SiNₓ), germanium nitride (GeNₓ), aluminum nitride (AlNₓ), and silicon carbide (SiC). The thickness of the first protective layer 3 is in the range of 1nm to 300nm. The first protective layer can be one of above materials or a complex layer comprising above materials.

As shown in FIG. 1A, the first recording layer 4 contacts the second recording layer 5 and is made of a metal material, such as tantalum (Ta), nickel (Ni), molybdenum (Mo), or alloy containing at least one of these metals as primary components. The thickness of the first recording layer 4 is in the range of 3nm to 50nm.

The second recording layer 5 is made of a primary component selected from silicon (Si) or germanium (Ge). The thickness of the second recording layer 5 is in the range of 3nm to 50nm. The laminating first and second recording layer, upon heating via irradiation of a laser beam, is induced to for undergoing a local reaction and heat absorption to form a recorded mark with distinctive reflectivity.

The second protective layer 6 is formed on the second recording layer 5 and is comprised of a material including zinc sulfide-silicon dioxide (ZnS-SiO₂), niobium oxide (NbₓO_{y}), tin dioxide-silicon dioxide (SnO₂-SiO₂), silicon nitride (SiNₓ), germanium nitride (GeNₓ), aluminum nitride (AlNₓ), and silicon carbide (SiC). The thickness of the second protective layer 6 is in the range of 1nm to 300nm. The second protective layer can be one of above materials or a complex layer comprising above materials.

As shown in FIG. 1A, a light transmitting layer 7 is formed on the second protective layer 6 and is made of a ultraviolet-curing resin. The light transmitting layer 7 functions as to protect the optical recording medium from moisture, dirt and oxidation. The light transmitting layer 7 has high transmittance under visible light wavelength.

On the other hand, the structure of the optical recording media of the present invention can be for example, comprised of a substrate 1, a first protective layer 3, a second recording layer 4, a first recording layer 5, a second protective layer 6, a reflective layer 2, and a light transmitting layer 7 as shown in FIG 1B.

To make clearer the aforementioned objectives, features, and advantages of the present invention, embodiments accompanied by figures are described in detail below.

Experiment 1, to form a disc with the structure as shown in FIG. 1A: Utilizing magnetic sputtering, a reflective layer (Ag with a thickness of 100nm) is formed on a Blue-ray disc (BD-R) substrate that has a thickness of 1.1mm and track pitch of 0.34µm. Then a first protective layer (ZnS-SiO₂ with a thickness of 25nm) formed on the surface of reflective layer, a first recording layer (Ta with a thickness of 4nm) formed on the surface of first protective layer, a second recording layer (Si with a thickness of 6nm) formed on the surface of the first recording layer, a second protective layer (ZnS-SiO₂ with a thickness of 25nm) formed on the surface of second recording layer and a light transmitting layer with a thickness of 0.1mm formed on the surface of the second protective layer, sequentially.

The thickness of the film was measured by atomic force microscope (AFM) and the optical measuring equipment (Eta-Optik). The disc made according to experiment 1 was recorded and measured by Pulstec ODU-1000 dynamic tester with 405 nm laser wavelength and 0.85 numerical aperture (NA). The writing power of the dynamic tester is in the range of 6.5mW to 12mW, and the recording velocities were selected to be 4.92m/s, 9.84m/s, 19.68m/s corresponding to the BD-R 1X, 2X, 4X recording speed, respectively.

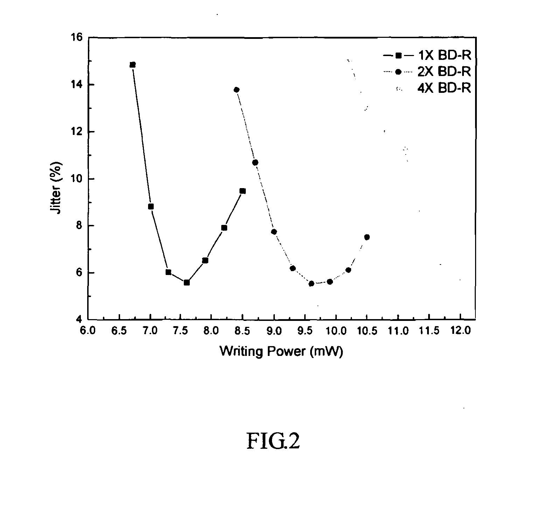

FIG. 2. shows that a characteristics diagram showing the relationship between the write power and jitter values of the reproduction signal, for the optical recording medium of an experiment 1 of the invention. At BD-R 1X recording speed, jitter value decreases from 14.9% to its lowest value about 5.6 % as the writing power increases from 6.7mW to 7.6mW, and then rises to 9.5% as the laser power is further increased to 8.5mW. The similar trend was shown at 2X and 4X recording speeds. We can obtain optimum recording powers from these power margins at several recording speed. By applying an appropriate writing power, the minimum bottom jitter values of less than 6.5% can be obtained from 1X to 4X recording speeds. Thus, the optical recording media of the present invention can be used since the jitter characteristic is good.

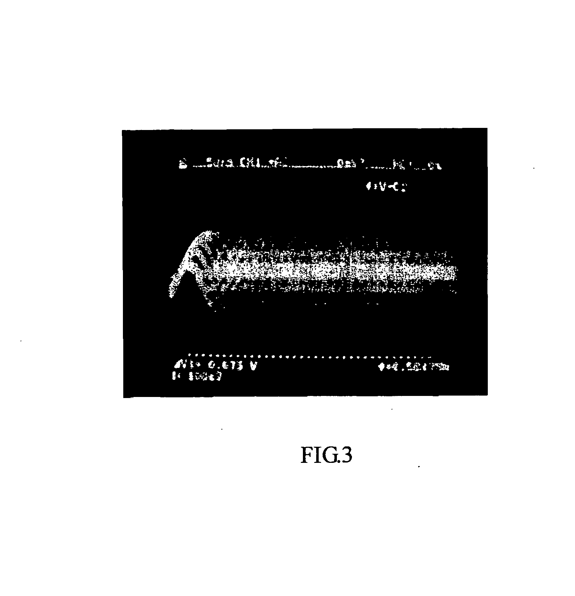

FIG. 3 shows a BD 2T-8T dynamic eye pattern of a disc according to experiment 1 of the present invention at 4X recording speed corresponding with jitter value of 5.6%. Clear eye pattern can be observed.

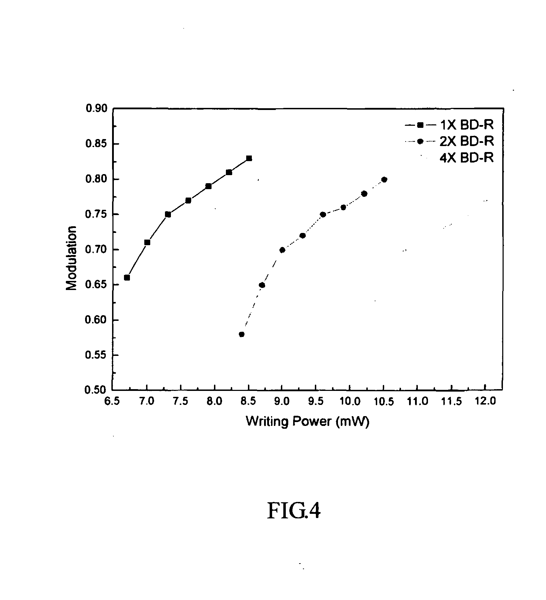

FIG. 4 shows the modulation dependent on writing powers at different recording speeds. The modulations of test disc increase with increasing writing power. However, the modulations are over 0.4 at 1X to 4X recording speeds.

Additionally, a climate storage test was applied to evaluate the disc performance in the practical applications. The disc is recorded first and followed to the harsh environmental treatment, called archived test. The harsh experiments were conducted in the oven under 80°C and 85% relative humidity for 250 hours, then comparing the disc jitter values before and after the archived test.

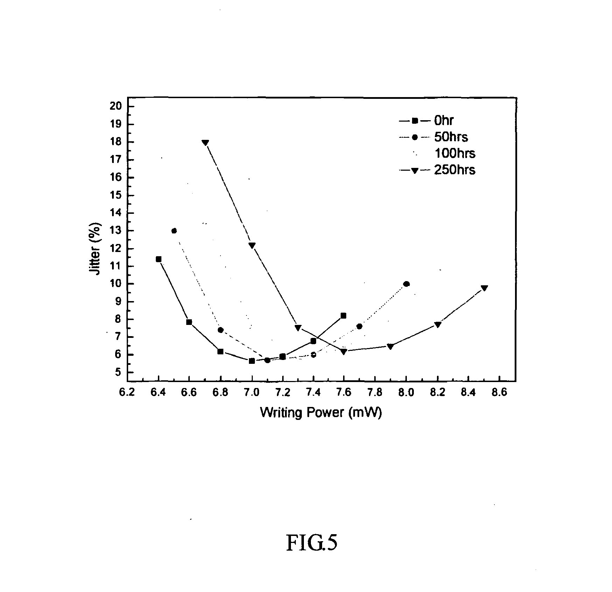

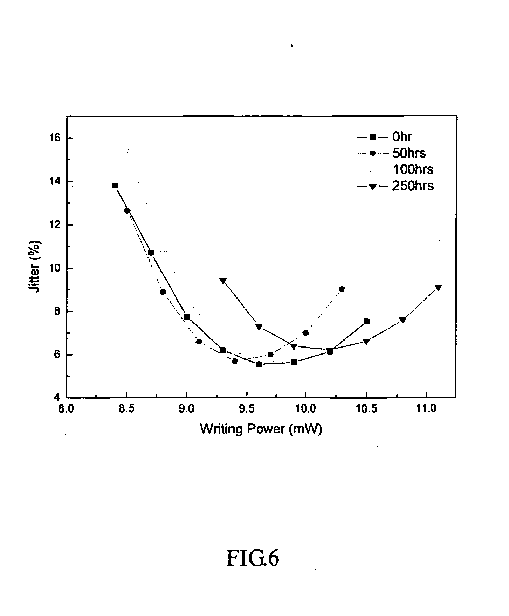

The climate test results of the testing disc under 80°C temperature and 85% relative humidity for 50, 100 and 250 hours respectively, for the optical recording medium according to experiment 1 at BD-R 1X and 2X recording speed were shown in FIG. 5 and FIG. 6 respectively. The jitter values changed slightly even the disc according to experiment 1 experienced 80°C temperature and 85% relative humidity for 250 hours. It indicates the optical recording medium of the invention have good signal quality at high-speed recording and archival life stability.

Experiment 2, to form a disc with the structure as shown in FIG. 1A: Utilizing magnetic sputtering, a reflective layer (Ag with a thickness of 100nm) is formed on a Blue-ray disc (BD-R) substrate that has a thickness of 1.1mm and track pitch of 0.34µm. Then a first protective layer (ZnS-SiO₂ with a thickness of 25nm) formed on the surface of reflective layer, a first recording layer (Ni with a thickness of 6nm) formed on the surface of first protective layer, a second recording layer (Si with a thickness of 6nm) formed on the surface of the first recording layer, a second protective layer (ZnS-SiO₂ with a thickness of 25nm) formed on the surface of second recording layer and a light transmitting layer with a thickness of 0.1mm formed on the surface of the second protective layer, sequentially.

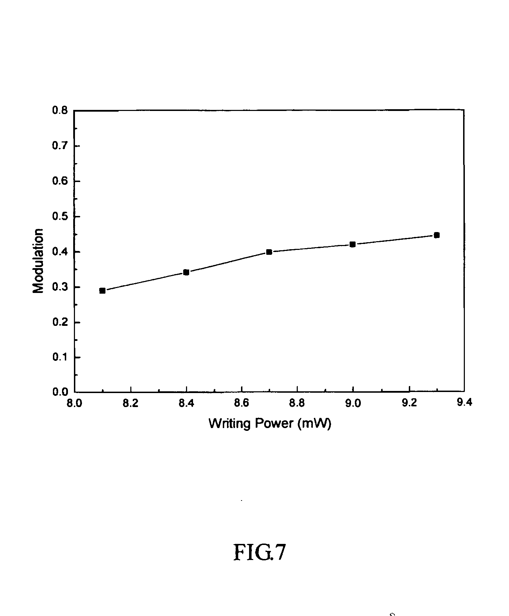

FIG. 7 shows the relationship between the write power and modulation of the reproduction signal according to the disc of experiment 2 at BD-R 2X recording speed. The modulations of test disc increase with increasing writing power. However, the modulations can exceed 0.4 by applying higher than 8.7mW writing power. It indicates the optical recording medium according to experiment 2 can form stable recorded mark which has distinguishable reflectivity from the surrounding unrecorded regions, and thus is practically useful.

## Claims

1. An optical recording medium comprising:
a substrate (1);
a second recording layer (5) comprising a semiconductor, wherein the semiconductor is selected from the element of Si or Ge, and combinations thereof;
a first recording layer (4) containing an element selected from the group consisting of Ni, Co, Mo, and Ta as a primary component; and
a reflective layer (2).

2. An optical recording medium according to claim 1, wherein a thickness of the first recording layer (4) and the second recording layer (5) is in the range of 3nm∼50nm.

3. An optical recording medium according to claim 1, which further comprises a first protective layer (3) and a second protective layer (6) on opposites sides of the recording layer (4, 5).

4. An optical recording medium according to claim 3, wherein the first protective layer (3) and the second protective layer (6) are made of a material selected from the group consisting of zinc sulfide-silicon dioxide (ZnS-SiO₂), niobium oxide (NbₓO_{y}), tin dioxide-silicon dioxide (SnO₂-SiO₂), silicon nitride (SiNₓ), germanium nitride (GeNₓ), aluminum nitride (AlNₓ), and silicon carbide (SiC).

5. An optical recording medium according to claim 3, wherein a thickness of the first protective layer (3) and the second protective layer (6) is in the range of 1nm∼300nm.

6. An optical recording medium according to claim 3, wherein the first protective layer (3) and the second protective layers (6) comprise a single dielectric layer or a complex dielectric layer.

7. An optical recording medium according to claim 1, wherein the reflective layer (2) is made of a material selected from the group consisting of Au, Ag, Mo, Al, Ti, Ta, and an alloy of the foregoing metals.

8. An optical recording medium according to claim 1, which further comprises a light transmitting layer (7) having a thickness of 10 to 600 µm on the opposite side to the substrate (1) with respect to the recording layer (4, 5).

9. An optical recording medium comprising:
a substrate (1);
a reflective layer (2);
a first recording layer(4) containing an element selected from the group consisting of Ni, Co, Mo, and Ta as a primary component;
a second recording layer (3) comprising a semiconductor, wherein the semiconductor is selected from the element of Si or Ge, and combinations thereof.

10. An optical recording medium according to claim 9, wherein a thickness of the first recording layer (4) and the second recording layer (5) is in the range of 3nm∼50nm.

11. An optical recording medium according to claim 9, which further comprises a first protective layer(3) and a second protective layer(6) on opposites sides of the recording layer (4, 5).

12. An optical recording medium according to claim 11, wherein the first protective layer (3) and the second protective layer (6) are made of a material selected from the group consisting of zinc sulfide-silicon dioxide (ZnS-SiO₂), niobium oxide (NbₓO_{y}), tin dioxide-silicon dioxide (SnO₂-SiO₂), silicon nitride (SiNₓ), germanium nitride (GeNₓ), aluminum nitride (AlNₓ), and silicon carbide (SiC).

13. An optical recording medium according to claim 11, wherein a thickness of the first protective layer (3) and the second protective layer (6) is in the range of 1nm∼300nm.

14. An optical recording medium according to claim 11, wherein the first protective layer(3) and the second protective layer (6) comprise a single dielectric layer or a complex dielectric layer.

15. An optical recording medium according to claim 9, wherein the reflective layer (2) is made of a material selected from the group consisting of Au, Ag, Mo, Al, Ti, Ta, and an alloy of the foregoing metals.

16. An optical recording medium according to claim 9, which further comprises a light transmitting layer (7) having a thickness of 10 to 600 µm on the opposite side to the substrate (1) with respect to the recording layer (4, 5).

## Patentansprüche

1. Optisches Aufzeichnungsmedium, aufweisend:
ein Substrat (1);
eine zweite Aufzeichnungsschicht (5), die einen Halbleiter aufweist, wobei der Halbleiter aus den Elementen Si oder Ge oder diesbezügliche Kombinationen ausgewählt ist;
eine erste Aufzeichnungsschicht (4), die ein Element, das aus der Gruppe bestehend aus Ni, Co, Mo und Ta ausgewählt ist, als eine Primärkomponente enthält, und
eine Reflexionsschicht (2).

2. Optisches Aufzeichnungsmedium gemäß Anspruch 1, wobei eine Dicke der ersten Aufzeichnungsschicht (4) und der zweiten Aufzeichnungsschicht (5) in dem Bereich von 3 nm∼50 nm liegt.

3. Optisches Aufzeichnungsmedium gemäß Anspruch 1, weiterhin aufweisend eine erste Schutzschicht (3) und eine zweite Schutzschicht (6) an gegenüberliegenden Seiten der Aufzeichnungsschicht (4, 5).

4. Optisches Aufzeichnungsmedium gemäß Anspruch 3, wobei die erste Schutzschicht (3) und die zweite Schutzschicht (6) aus einem Material hergestellt sind, das aus der Gruppe bestehend aus Zinksulfid-Siliciumdioxid (ZnS-SiO₂), Nioboxid (NbₓO_{y}), Zinndioxid-Siliciumdioxid (SnO₂-SiO₂), Siliciumnitrid (SiNₓ), Germaniumnitrid (GeNₓ), Aluminiumnitrid (AINₓ) und Siliciumcarbid (SiC) ausgewählt ist.

5. Optisches Aufzeichnungsmedium gemäß Anspruch 3, wobei eine Dicke der ersten Schutzschicht (3) und der zweiten Schutzschicht (6) in dem Bereich von 1 nm∼300 nm liegt.

6. Optisches Aufzeichnungsmedium gemäß Anspruch 3, wobei die erste Schutzschicht (3) und die zweite Schutzschicht (6) eine einzelne dielektrische Schicht oder eine komplexe, dielektrische Schicht aufweisen.

7. Optisches Aufzeichnungsmedium gemäß Anspruch 1, wobei die Reflexionsschicht (2) aus einem Material hergestellt ist, das aus der Gruppe bestehend aus Au, Ag, Mo, Al, Ti, Ta und einer Legierung der vorgenannten Metalle ausgewählt ist.

8. Optisches Aufzeichnungsmedium gemäß Anspruch 1, weiterhin aufweisend eine lichtdurchlässige Schicht (7) mit einer Dicke von 10 bis 600 µm an der in Bezug auf die Aufzeichnungsschicht (4, 5) gegenüberliegenden Seite zu dem Substrat (1).

9. Optisches Aufzeichnungsmedium, aufweisend:
ein Substrat (1);
eine Reflexionsschicht (2);
eine erste Aufzeichnungsschicht (4), die ein Element, das aus der Gruppe bestehend aus Ni, Co, Mo und Ta ausgewählt ist, als eine Primärkomponente enthält;
eine zweite Aufzeichnungsschicht (3), die einen Halbleiter aufweist, wobei der Halbleiter aus den Elementen Si oder Ge oder diesbezügliche Kombinationen ausgewählt ist.

10. Optisches Aufzeichnungsmedium gemäß Anspruch 9, wobei eine Dicke der ersten Aufzeichnungsschicht (4) und der zweiten Aufzeichnungsschicht (5) in dem Bereich von 3 nm∼50 nm liegt.

11. Optisches Aufzeichnungsmedium gemäß Anspruch 9, weiterhin aufweisend eine erste Schutzschicht (3) und eine zweite Schutzschicht (6) an gegenüberliegenden Seiten der Aufzeichnungsschicht (4, 5).

12. Optisches Aufzeichnungsmedium gemäß Anspruch 11, wobei die erste Schutzschicht (3) und die zweite Schutzschicht (6) aus einem Material hergestellt sind, das aus der Gruppe bestehend aus Zinksulfid-Siliziumdioxid (ZnS-SiO₂), Nioboxid (NbₓO_{y}), Zinndioxid-Siliciumdioxid (SnO₂-SiO₂), Siliciumnitrid (SiNₓ), Germaniumnitrid (GeNₓ), Aluminiumnitrid (AINₓ) und Siliciumcarbid (SiC) ausgewählt ist.

13. Optisches Aufzeichnungsmedium gemäß Anspruch 11, wobei eine Dicke der ersten Schutzschicht (3) und der zweiten Schutzschicht (6) in dem Bereich von 1 nm∼300 nm liegt.

14. Optisches Aufzeichnungsmedium gemäß Anspruch 11, wobei die erste Schutzschicht (3) und die zweite Schutzschicht (6) eine einzelne dielektrische Schicht oder eine komplexe, dielektrische Schicht aufweisen.

15. Optisches Aufzeichnungsmedium gemäß Anspruch 9, wobei die Reflexionsschicht (2) aus einem Material hergestellt ist, das aus der Gruppe bestehend aus Au, Ag, Mo, Al, Ti, Ta und einer Legierung der vorgenannten Metalle ausgewählt ist.

16. Optisches Aufzeichnungsmedium gemäß Anspruch 9, weiterhin aufweisend eine lichtdurchlässige Schicht (7) mit einer Dicke von 10 bis 600 µm an der in Bezug auf die Aufzeichnungsschicht (4, 5) gegenüberliegenden Seite zu dem Substrat (1).

## Revendications

1. Support d'enregistrement optique, comprenant :
un substrat (1) ;
une seconde couche d'enregistrement (5) comprenant un semi-conducteur, le semi-conducteur étant choisi parmi l'élément Si ou Ge et leurs combinaisons ;
une première couche d'enregistrement (4) contenant un élément choisi dans le groupe constitué par Ni, Co, Mo et Ta en tant que composant principal ; et
une couche réfléchissante (2).

2. Support d'enregistrement optique selon la revendication 1, dans lequel une épaisseur de la première couche d'enregistrement (4) et de la seconde couche d'enregistrement (5) est dans la plage allant de 3 nm à ∼50 nm.

3. Support d'enregistrement optique selon la revendication 1, comprenant en outre une première couche protectrice (3) et une seconde couche protectrice (6) sur les côtés opposés de la couche d'enregistrement (4, 5).

4. Support d'enregistrement optique selon la revendication 3, dans lequel la première couche protectrice (3) et la seconde couche protectrice (6) sont faites d'un matériau choisi dans le groupe constitué par le disulfure de zinc - dioxyde de silicium (ZnS-SiO₂), un oxyde de niobium (NbₓO_{y}), le dioxyde d'étain - dioxyde de silicium (SnO₂ - SiO₂), un nitrure de silicium (SiNₓ), un nitrure de germanium (GeNₓ), un nitrure d'aluminium (AINₓ) et le carbure de silicium (SiC).

5. Support d'enregistrement optique selon la revendication 3, dans lequel une épaisseur de la première couche protectrice (3) et de la seconde couche protectrice (6) est dans la plage allant de 1 nm à ∼300 nm.

6. Support d'enregistrement optique selon la revendication 3, dans lequel la première couche protectrice (3) et la seconde couche protectrice (6) comprennent une unique couche de diélectrique ou une couche complexe de diélectrique.

7. Support d'enregistrement optique selon la revendication 1, dans lequel la couche réfléchissante (2) est faite d'un matériau choisi dans le groupe constitué par Au, Ag, Mo, Al, Ti, Ta et un alliage de ces métaux.

8. Support d'enregistrement optique selon la revendication 1, comprenant en outre une couche transmettant la lumière (7) ayant une épaisseur de 10 µm à 600 µm sur le côté opposé du substrat (1) par rapport à la couche d'enregistrement (4, 5).

9. Support d'enregistrement optique, comprenant :
un substrat (1) ;
une couche réfléchissante (2) ;
une première couche d'enregistrement (4) contenant un élément choisi dans le groupe constitué par Ni, Co, Mo et Ta en tant que composant principal ;
une seconde couche d'enregistrement (3) comprenant un semi-conducteur, le semi-conducteur étant choisi parmi l'élément Si ou Ge et leurs combinaisons.

10. Support d'enregistrement optique selon la revendication 9, dans lequel une épaisseur de la première couche d'enregistrement (4) et de la seconde couche d'enregistrement (5) est dans la plage allant de 3 nm à ∼50 nm.

11. Support d'enregistrement optique selon la revendication 9, comprenant en outre une première couche protectrice (3) et une seconde couche protectrice (6) sur les côtés opposés de la couche d'enregistrement (4, 5).

12. Support d'enregistrement optique selon la revendication 11, dans lequel la première couche protectrice (3) et la seconde couche protectrice (6) sont faites d'un matériau choisi dans le groupe constitué par le disulfure de zinc - dioxyde de silicium (ZnS-SiO₂), un oxyde de niobium (NbₓO_{y}), le dioxyde d'étain - dioxyde de silicium (SnO₂ - SiO₂), un nitrure de silicium (SiNₓ), un nitrure de germanium (GeNₓ), un nitrure d'aluminium (AINₓ) et le carbure de silicium (SiC).

13. Support d'enregistrement optique selon la revendication 11, dans lequel une épaisseur de la première couche protectrice (3) et de la seconde couche protectrice (6) est dans la plage allant de 1 nm à ∼300 nm.

14. Support d'enregistrement optique selon la revendication 11, dans lequel la première couche protectrice (3) et la seconde couche protectrice (6) comprennent une unique couche de diélectrique ou une couche complexe de diélectrique.

15. Support d'enregistrement optique selon la revendication 9, dans lequel la couche réfléchissante (2) est faite d'un matériau choisi dans le groupe constitué par Au, Ag, Mo, Al, Ti, Ta et un alliage de ces métaux.

16. Support d'enregistrement optique selon la revendication 9, comprenant en outre une couche transmettant la lumière (7) ayant une épaisseur de 10 µm à 600 µm sur le côté opposé du substrat (1) par rapport à la couche d'enregistrement (4, 5).
